# EUROPÄISCHE PATENTSCHRIFT

(11) **EP 3 181 389 B1**
(45) Veröffentlichungstag und Bekanntmachung des Hinweises auf die Patenterteilung: **17.04.2019**
(21) Anmeldenummer: 16203685.9
(22) Anmeldetag: 13.12.2016
(51) Int. Cl.: B60J 7/22

(54) **WINDSCHUTZEINRICHTUNG**
WIND DEFLECTOR DEVICE
DISPOSITIF DE PROTECTION CONTRE LE VENT

(30) Priorität: 14.12.2015 DE 102015121767
(43) Veröffentlichungstag der Anmeldung: 21.06.2017
(73) Patentinhaber: iKON Fahrzeug Design und Engineering GbR, 85092 Kösching (DE); FKT GmbH, 85104 Pförring (DE)
(72) Erfinder: Körber, Stefan, 85092 Kösching (DE); Matschat, Dietmar, 85117 Eitensheim (DE)
(74) Vertreter: Schlief, Thomas P.

(56) Entgegenhaltungen:
- DE-A1- 10 162 758
- DE-A1- 19 836 473
- DE-A1-102006 058 114
- DE-U1- 20 314 892

## Beschreibung

Die Erfindung betrifft eine Windschutzeinrichtung nach dem Oberbegriff des Anspruchs 1.

Windschutzeinrichtungen zum reversiblen Einbau in Cabriolets sind mittlerweile Standard. In ihnen sind zumeist blickdurchlässige Flachmaterialbahnen, beispielsweise Gewirke, eingespannt. Es gibt Modelle, die permanent im Fahrzeug verbleiben und beispielsweise mittels Motor von einer Ruhe- in eine Gebrauchsstellung verfahren werden. Andere Modelle sind aus dem Fahrzeug herausnehmbar und meist nach Zusammenfalten im Fahrzeug platzsparend verstaubar. Die bekannten Windschutzeinrichtungen werden zwischen oder hinter den Vordersitzen platziert und schützen Fahrer und Beifahrer vor der Windwalze, die durch die Fahrwindablenkung an der Windschutzscheibe ihren Ursprung hat und im hinteren Fahrgastraum sich nach unten und vorne in Richtung der Vordersitze bewegt.

Eine Windschutzeinrichtung gemäß dem Oberbegriff des Anspruchs 1 ist aus der DE 101 62 758 A1 bekannt. Bei einer dort beschriebenen Ausführungsform weist eine die beiden Vordersitze schützende Windschotteinrichtung eine mittige trapezförmige Aussparung auf, in die ein durchsichtiger Bereich aus Kunststoff oder einem netzartigen Einsatz formschlüssig, aber lösbar eingeclipst ist. Dieser durchsichtige Bereich dient zur Verbesserung der Durchsicht nach hinten.

Bei größeren, viersitzigen Cabriolets besteht ebenfalls das Bedürfnis, die auf den Hintersitzen platzierten Fahrgäste vor der Windwalze zu schützen. Hier mangelt es allerdings an Konzepten, die eine insgesamt umständliche Handhabung und insbesondere Verstauung der beiden Windschutzeinrichtungen verhindern. Es ist daher die Aufgabe der vorliegenden Erfindung, den Windschutz und die Bedienbarkeit der entsprechenden Windschutzeinrichtungen für ein zumindest viersitziges Cabriolet zu optimieren. Es sei vorweg gesagt, dass unter dem Begriff "Cabriolet" auch Roadster und ggf. andere nach oben offene Fahrzeuge zu verstehen sind. Hierzu gehören beispielsweise auch entsprechend ausgerüstete SUVs, die mittlerweile auf dem Kfz-Markt erhältlich sind.

Diese Aufgabe wird bei einer Windschutzeinrichtung der eingangsgenannten Art durch die Merkmale des Anspruchs 1 gelöst.

Die Vorteile der Erfindung sind insbesondere darin zu sehen, dass eine zweite Windschotteinrichtung vorgesehen ist, die platzsparend mit der ersten Windschotteinrichtung koppelbar ist, aber eigene Funktionen zum Schutz vor Luftverwirbelungen übernehmen kann.

Gemäß einer besonders bevorzugten Ausführungsform kann die zweite Windschotteinrichtung zum Schutz von hinteren Passagieren im Bereich von Rücksitzen (wenn vorhanden) in das Cabriolet ein- und ausgebaut werden. Zudem ist ein Windschottrahmen der zweiten Windschotteinrichtung mit einem Rahmen der ersten Windschotteinrichtung koppelbar. Im getrennten, entkoppelten Zustand kann die zweite Windschotteinrichtung im Bereich der Kopfstützen einer hinteren Sitzreihe befestigt werden, während die erste Windschotteinrichtung weiter vorne im Cabriolet befestigt oder auch im zusammen geklappten Zustand verstaut werden kann. Durch diese erfindungsgemäße Ausgestaltung ist es möglich, dass bei einer Kopplung der beiden Windschotteinrichtungen, diese als eine Einheit gehandhabt werden können, wenn sich beide nicht im Einsatz in ihrer jeweiligen Position befinden. Hierdurch ergeben sich Handhabungs- und auch Aufbewahrungserleichterungen. Insbesondere benötigt die zweite Windschotteinrichtung keinen eigenen Stauraum.

Bei einer alternativen oder zusätzlichen Ausgestaltung der erfindungsgemäßen Windschutzeinrichtung kann der Windschottrahmen der zweiten Windschotteinrichtung auch unabhängig vom Windschottrahmen der ersten Windschotteinrichtung (d.h. im entkoppelten Zustand) im Bereich der vorderen, ggf. auch einzigen (Roadster), Sitzreihe des Cabriolets reversibel eingebaut werden. Dann werden Fahrer und Beifahrer auf diesen Vordersitzen durch den vorzugsweise kleineren Windschottrahmen der zweiten Windschotteinrichtung vor Luftverwirbelungen geschützt. Die größere erste Windschotteinrichtung kann dann beispielsweise im Kofferraum verstaut werden. Die größere Windschotteinrichtung kann alternativ an Stelle des kleineren Windschottrahmens der zweiten Windschotteinrichtung direkt hinter Fahrer und Beifahrer platziert werden. Ebenso ist es möglich, dass beide Rahmen miteinander gekoppelt sind und als Ensemble unmittelbar hinter Fahrer und Beifahrer befestigt werden.

Bei einer alternativen oder zusätzlichen Ausgestaltung der erfindungsgemäßen Windschutzeinrichtung kann der Windschottrahmen der zweiten Windschotteinrichtung mit dem Windschottrahmen der ersten Windschotteinrichtung, bevorzugt miteinander gekoppelt, im Bereich der vorderen (ggf. auch einzigen) Sitzreihe in das Cabriolet eingebaut werden. Der Windschottrahmen der zweiten Windschotteinrichtung kann dann beispielsweise in Gebrauchsstellung gebracht werden, während der Windschottrahmen der ersten Windschotteinrichtung auf den Abdeckungsrahmen (falls ein solcher vorhanden ist) in eine im Wesentlichen horizontale Lage abgeklappt werden kann. Auch sind Ausgestaltungen möglich, bei denen die Klapppositionen genau umgekehrt sind, d.h. der Windschottrahmen der ersten Windschotteinrichtung ist aufgestellt, während der Windschottrahmen der zweiten Windschotteinrichtung abgeklappt ist. Zudem können bei vorteilhaften Ausführungsformen auch beide Windschottrahmen in eine senkrechte Gebrauchsstellung und/oder beide in eine Ruhestellung geschwenkt werden.

Eine bevorzugte Koppelart zwischen der ersten und der zweiten Windschotteinrichtung besteht in einem Zusammenstecken der beiden zugehörigen Rahmen, wobei insbesondere entsprechende Zapfen und Vertiefungen o.ä. zum Einsatz kommen können. Vorteilhafterweise wird solch eine zumindest formschlüssige Verbindung durch eine Verrastung gesichert. Hierbei sind demnach die Koppelelemente vorzugsweise als Rastelemente ausgebildet, wobei insbesondere Steckachsen bevorzugt sind. Gemäß einer bevorzugten entsprechenden Ausführungsform ist die Verrastung mittels gefedertem Druckknopf oder Schwenkhebel lösbar.

Gemäß einer bevorzugten Ausführungsform ist der besagte Rahmen der ersten Windschotteinrichtung ein Abdeckungsrahmen, der im eingebauten Zustand der ersten Windschotteinrichtung einen Fahrgastraum hinter der vorderen Sitzreihe abdeckt, und dass die erste Windschotteinrichtung zusätzlich zum Abdeckungsrahmen einen Windschottrahmen umfasst, der aufrecht hinter oder zwischen den Kopfstützen der vorderen Sitzreihe platzierbar ist.

Gemäß einer vorteilhaften Ausführungsform ist derjenige Rahmen der ersten Windschotteinrichtung, an dem die zweite Windschotteinrichtung gekoppelt werden kann, ein Windschottrahmen, welcher aufrecht hinter oder zwischen den Kopfstützen der vorderen Sitzreihe reversibel aufgestellt werden kann. In diesem Fall sind also die beiden miteinander koppelbaren Teile der Windschotteinrichtungen Windschottrahmen, die im Wesentlichen senkrecht im Fahrzeug platziert werden.

Gemäß einer alternativen Ausführungsform der Erfindung ist derjenige Rahmen der ersten Windschotteinrichtung, an dem die zweite Windschotteinrichtung gekoppelt werden kann, ein Abdeckungsrahmen, welcher im eingebauten Zustand der ersten Windschotteinrichtung einen Fahrgastraum hinter der vorderen Sitzreihe abdeckt. Dieser Abdeckungsrahmen erstreckt sich also bei in Gebrauchsstellung befindlicher erster Windschotteinrichtung im Wesentlichen in einer Horizontalebene. Um die Windschutzwirkung zu entfalten, ist am Abdeckungsrahmen der ersten Windschotteinrichtung ein Windschottrahmen befestigt, vorzugsweise angelenkt, der aufrecht hinter oder zwischen den Kopfstützen der vorderen Sitzreihe platzierbar bzw. aufstellbar ist. Es ist selbstverständlich, dass bei einem den hinteren Fahrgastbereich abdeckenden Abdeckrahmen der ersten Windschotteinrichtung die zweite Windschott-einrichtung zwar im Bereich der hinteren Kopfstützen platziert werden kann, aber keine Passagiere auf den hinteren Sitzen Platz nehmen können.

In den beiden Windschottrahmen sind zweckmäßigerweise blickdurchlässige und nur zum Teil für Wind durchlässige Flachmaterialbahnen eingespannt. Im Abdeckrahmen kann auch eine Flachmaterialbahn eingespannt sein.

Eine sehr platzsparende Anordnung der erfindungsgemäßen Windschutzeinrichtung ergibt sich, wenn der Windschottrahmen der zweiten Windschotteinrichtung im gekoppelten Zustand innerhalb der Außenkontur des Rahmens der ersten Windschotteinrichtung zum Liegen kommt. Eine solche Anordnung ist möglich, wenn die zweite, hintere Windschotteinrichtung - wie es in aller Regel der Fall sein wird - kleinere Ausmaße aufweist als die erste, vordere Windschotteinrichtung. Alternativ kann der Windschottrahmen der zweiten Windschotteinrichtung auch im Wesentlichen so groß wie der Rahmen der ersten Windschotteinrichtung ausgebildet sein, wobei beide Rahmen mit ihren flachen Seiten aneinandergelegt miteinander koppelbar sind, beispielsweise durch Verrasten oder Verstecken.

Besonders vorteilhaft ist hierbei eine vollständige Einrahmung der zweiten Windschotteinrichtung von der ersten Windschotteinrichtung, wenn beide miteinander gekoppelt sind. Demgemäß nimmt die erfindungsgemäße Windschutzeinrichtung nicht mehr Platz ein als die bekannte Windschutzeinrichtung mit nur einer Windschotteinrichtung. Die zweite Windschotteinrichtung ist ggf. von der Seite der Windschutzeinrichtung gar nicht zu sehen.

Gemäß einer Alternative ist der Windschottrahmen der zweiten Windschotteinrichtung im gekoppelten Zustand außerhalb der Außenkontur des Rahmens der ersten Windschotteinrichtung angeordnet. Es kann hierbei vorgesehen sein, dass die zweite Windschotteinrichtung vor und/oder hinter (bzw. über und/oder unter) der besagten Außenkontur des Rahmens der ersten Windschotteinrichtung und damit auch vor und/oder hinter (bzw. über und/oder unter) deren Flachmaterialbahn platzierbar ist.

Einer einfachen Handhabung kommt es zugute, wenn der Windschottrahmen der zweiten Windschotteinrichtung lediglich an einer Rahmenseite mit dem Rahmen der ersten Windschotteinrichtung koppelbar ist. Dementsprechend müssen auch nur an einer Rahmenseite entsprechende Koppelelemente vorgesehen sein.

Gemäß einer vorteilhaften Weiterbildung der Erfindung weist der Windschottrahmen der zweiten Windschotteinrichtung eine umlaufende Kontur auf, die innerhalb eines entsprechend komplementär ausgebildeten umlaufenden Konturprofils des mindestens einen Rahmens der ersten Windschotteinrichtung aufnehmbar ist und demgemäß im Wesentlichen vollständig eingefasst ist. Das besagte Konturprofil verläuft hierbei bevorzugt zumindest teilweise innerhalb des Rahmens der ersten Windschotteinrichtung (und kann als "Rahmen-im-Rahmen" bezeichnet werden). Vorzugsweise sind hierbei mehrere Koppelstellen entlang des Windschottrahmens der zweiten Windschotteinrichtung mit der besagten Einfassung der ersten Windschotteinrichtung vorhanden. Hierdurch kann eine besonders sichere bzw. stabile Aufbewahrung der zweiten Windschotteinrichtung realisiert werden.

Gemäß einer alternativen Ausgestaltung ist der Windschottrahmen der zweiten Windschotteinrichtung in einen offenen konkaven Bereich im Rahmen der ersten Windschotteinrichtung einsetzbar. Hierbei können der Windschottrahmen der zweiten Windschotteinrichtung und die sich an den konkaven Bereich anschließenden Rahmenabschnitte der ersten Windschotteinrichtung eine im Wesentlichen miteinander fluchtende, d.h. ästhetisch nahezu geschlossene, Kontur bilden.

In dem Bereich der ersten Windschotteinrichtung, der zum Koppeln mit der zweiten Windschotteinrichtung vorgesehen ist, kann eine Flachmaterialbahn eingespannt sein, wobei die zweite Windschotteinrichtung im gekoppelten Zustand vor oder hinter dieser Flachmaterialbahn angeordnet ist. Alternativ ist der besagte Bereich, in dem die zweite Windschotteinrichtung platziert ist, leer, d.h. nicht mit einer Flachmaterialbahn bespannt.

Bei besonders bevorzugten Weiterbildungen der Erfindung weisen sowohl der Rahmen der ersten Windschotteinrichtung als auch der Windschottrahmen der zweiten Windschotteinrichtung mindestens jeweils eine Klappachse auf. Sind die beiden Windschotteinrichtungen erfindungsgemäß miteinander gekoppelt, sind die beiden Klappachsen derart zueinander angeordnet, dass sie beim Zusammenfalten der Windschutzeinrichtung zusammenfallen und beide Windschotteinrichtungen demgemäß um diese gleiche Achse klappbar sind. Mit einer Bewegung lassen sich also beide Windschotteinrichtungen gemeinsam von einer Gebrauchsstellung in eine Ruhestellung und zurück überführen. Eine separate und damit umständliche Handhabung ist nicht notwendig.

Es sind bei der klappbaren Ausführung des besagten Rahmens der ersten Windschotteinrichtung und der vorzugsweise ebenfalls klappbaren Ausführung des Windschottrahmens der zweiten Windschotteinrichtung verschiedene Ausgestaltungen möglich.

Ein Rahmen der ersten Windschotteinrichtung der erfindungsgemäßen Windschutzeinrichtung kann gemäß einer Ausführungsform ein Doppelgelenk mit zwei zueinander parallel verlaufenden Klappachsen aufweisen. Wenn die erste Windschotteinrichtung beispielsweise einen Abdeckungsrahmen und einen an diesen angelenkten Windschottrahmen aufweist, kann die erste Windschotteinrichtung zweifach klappbar ausgestaltet sein. Die erste Klappung auf der Gebrauchsstellung besteht in dem Zueinanderschwenken von Abdeckungsrahmen und Windschottrahmen. Die zweite Klappung erfolgt dann um ein Einfachgelenk des einen Rahmens, beispielsweise des Abdeckungsrahmens (oder des Windschottrahmens), und um das Doppelgelenk des anderen Rahmens, beispielsweise des Windschottrahmens (bzw. des Abdeckungsrahmens). In diesem Beispiel umgeben die beiden Teilrahmen des Windschottrahmens, die mit dem Doppelgelenk verbunden sind, die beiden mittels des Einfachgelenks verbundenen Teilrahmen des Abdeckungsrahmens.

Gemäß einer Alternative weisen die Rahmen der ersten und zweiten Windschotteinrichtungen Einfachscharniere auf, um ein ein- oder auch zweimaliges Klappen zu realisieren.

Auch der besagte Windschottrahmen der zweiten Windschotteinrichtung kann ein Doppelgelenk mit zwei parallelen Klappachsen aufweisen. In diesem Fall fallen diese Klappachsen mit den Klappachsen des Doppelgelenks der ersten Windschotteinrichtung zusammen.

Gemäß einer weiteren Ausführungsform ist der Windschottrahmen der zweiten Windschotteinrichtung in eine Rahmenhälfte des mindestens einen Rahmens der ersten Windschotteinrichtung einsteckbar. Wird demnach der besagte Rahmen der ersten Windschotteinrichtung um ein Einfachgelenk oder ein Doppelgelenk, welches die beiden Teilrahmen dieses Rahmens verbindet, verschwenkt, wird der Windschottrahmen der zweiten Windschotteinrichtung mit einer dieser beiden Teilrahmen mitverschwenkt. Der Windschottrahmen der zweiten Windschotteinrichtung wird hierbei aber nicht in sich geklappt, so dass diese keine eigenen Schwenkgelenke aufweisen muss. Die Variante der außermittigen Anordnung des Windschottrahmens der zweiten Windschotteinrichtung hat den Vorteil, dass sie - wenn sie mit dem Windschottrahmen der ersten Windschotteinrichtung gekoppelt ist und diese im Bereich der vorderen Sitzreihe in Gebrauchsstellung positioniert ist - insbesondere hinter der Fahrer- oder Beifahrerkopfstütze aus dem Blickfeld des Fahrers nach hinten weitgehend verschwindet.

Eine vorteilhafte Weiterbildung der Erfindung sieht vor, dass Koppelelemente am Windschottrahmen der zweiten Windschotteinrichtung vorgesehen sind, wobei diese Koppelelemente eine Doppelfunktion übernehmen. Einerseits kann mit ihnen der Windschottrahmen der zweiten Windschotteinrichtung mit dem besagten Rahmen der ersten Windschotteinrichtung verbunden werden, andererseits dienen sie zum Einstecken oder Einschieben in entsprechende Aufnahmen am Cabriolet. Gemäß einer dementsprechenden Ausführungsform sind die Koppelelemente als Steckstifte ausgebildet, die in korrespondierende Öffnungen am Cabriolet einführbar sind. Bevorzugt hierbei ist eine kraftschlüssige Verrastung.

Vorteilhaft ist eine Ausführungsform, bei welcher der Windschottrahmen der zweiten Windschotteinrichtung mit einem fest im Cabriolet montierten, aber zum Öffnen und Schließen beweglichen Verdeckkastendeckel koppelbar ist. In diesem Fall können beispielsweise entsprechende Einstecköffnungen an der Oberseite oder an der Abschlusskante des Verdeckkastendeckels vorgesehen sein. Diese Öffnungen können beispielsweise durch verschiebliche oder verschwenkbare Kappen bedeckt sein, wenn die zweite Windschotteinrichtung nicht eingesteckt ist.

Vorzugsweise ist der Windschottrahmen der zweiten Windschotteinrichtung vor oder zwischen zwei in y-Richtung (Fahrzeugquerrichtung) des Fahrzeugs angeordneten Überrollelementen platzierbar, wobei diese Überrollelemente bei einem Fahrzeugüberschlag aus einer Ruheposition herausfahren. Anders ausgedrückt ist die zweite Windschotteinrichtung vor oder über einer Traverse anordenbar, welche die beiden besagten Überrollelemente miteinander verbindet. Gemäß einer Alternative ist der Windschottrahmen der zweiten Windschotteinrichtung zwischen den hinteren Kopfstützen oder hinter diesen einsteckbar.

Vorteilhafterweise sind die erste und die zweite Windschotteinrichtung getrennt voneinander und/oder miteinander in ihre vorgesehenen Positionen aufbaubar.

Zudem ist es vorteilhaft, wenn die erste und die zweite Windschotteinrichtung getrennt voneinander und/oder miteinander verstaubar sind, beispielsweise in einem Kofferraum oder in einem hinteren Fußbereich des Cabriolets.

Die Erfindung betrifft ebenfalls ein Cabriolet mit einer wie vorbeschriebenen Windschutzeinrichtung.

Vorteilhafte Weiterbildungen der Erfindung sind durch die Merkmale der Unteransprüche gekennzeichnet.

Im Folgenden wird die Erfindung anhand von Ausführungsbeispielen näher erläutert. Es zeigen:
- **Fig. 1**: eine perspektivische Ansicht einer ersten Ausführungsform mit im Windschottrahmen der ersten Windschotteinrichtung gekoppelter zweiter Windschotteinrichtung;
- **Fig. 2**: eine perspektivische Ansicht der zusammengeklappten Ausführungsform der Fig. 1;
- **Fig. 3**: die erste Ausführungsform der Fig. 1 und 2 mit in ein Cabriolet eingesetzter erster und zweiter Windschotteinrichtung, beide aufgerichtet;
- **Fig. 4**: die Ausführungsform der Fig. 1-3 mit abgeklappter zweiter Windschotteinrichtung;
- **Fig. 5**: die Ausführungsform der Fig. 1-4 mit gekoppelter erster und zweiter Windschotteinrichtung, aufgerichtet;
- **Fig. 6**: wie in Fig. 5, aber mit abgeklappter erster und mit dieser gekoppelten zweiten Windschotteinrichtung;
- **Fig. 7**: wie in Fig. 4, aber mit hochgeklapptem Verdeckkastendeckel;
- **Fig. 8**: eine zweite Ausführungsform, bei der die zweite Windschotteinrichtung - unabhängig vom Verdeckkastendeckel - über einer Traverse zwischen zwei Überrollelementen angeordnet ist;
- **Fig. 9**: eine dritte Ausführungsform mit in ein Cabriolet eingesetzter erster und zweiter, breiter ausgeführten Windschotteinrichtung;
- **Fig. 10**: die dritte Ausführungsform der Erfindung mit gekoppelter erster und zweiter Windschotteinrichtung, aufgerichtet;
- **Fig. 11**: wie in Fig. 9, aber mit hochgeklapptem Verdeckkastendeckel;
- **Fig. 12**: eine perspektivische Ansicht einer vierten Ausführungsform mit im Windschottrahmen der ersten Windschotteinrichtung gekoppelter zweiter Windschotteinrichtung;
- **Fig. 13**: eine perspektivische Ansicht einer fünften Ausführungsform mit im Windschottrahmen der ersten Windschotteinrichtung gekoppelter zweiter Windschotteinrichtung;
- **Fig. 14**: eine perspektivische Ansicht einer sechsten Ausführungsform mit im Abdeckungsrahmen der ersten Windschotteinrichtung gekoppelter zweiter Windschotteinrichtung;
- **Fig. 15**: eine perspektivische Ansicht einer siebten Ausführungsform mit im Abdeckungsrahmen der ersten Windschotteinrichtung gekoppelter zweiter Windschotteinrichtung;
- **Fig. 16**: eine perspektivische Ansicht einer achten Ausführungsform mit im Abdeckungsrahmen der ersten Windschotteinrichtung gekoppelter zweiter Windschotteinrichtung;
- **Fig. 17**: eine perspektivische Ansicht einer zusammengeklappten neunten Ausführungsform mit im Abdeckungsrahmen der ersten Windschotteinrichtung gekoppelter zweiter Windschotteinrichtung;
- **Fig. 18**: eine äußerst schematische Vorderansicht einer erfindungsgemäßen Windschutzeinrichtung, und
- **Fig. 19a-19f**: äußerst schematische Seitenansichten der Windschutzeinrichtung gemäß der Fig. 18 mit verschiedenen Schwenkpositionen;

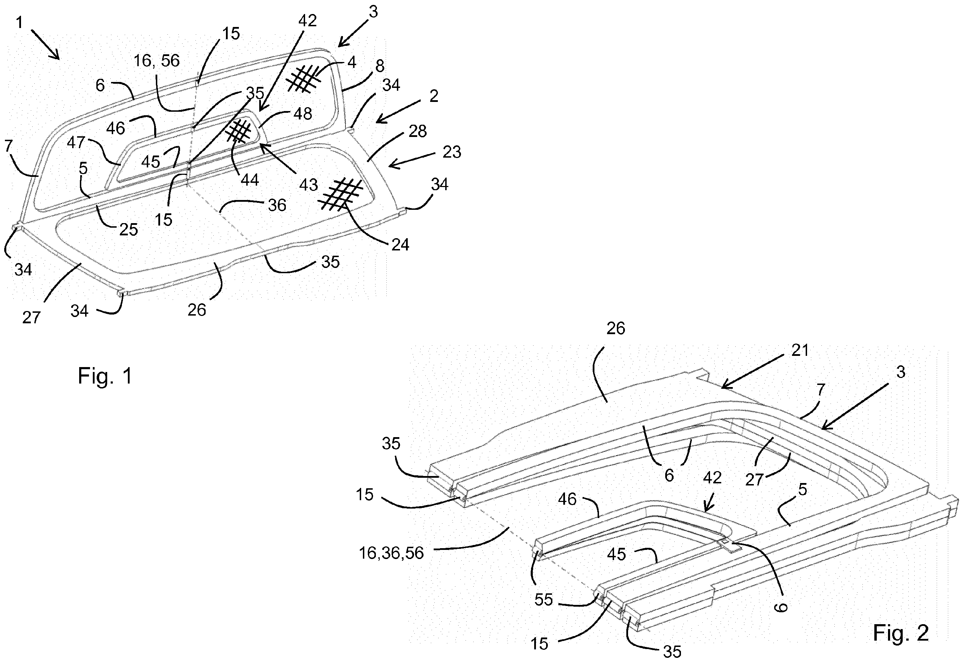

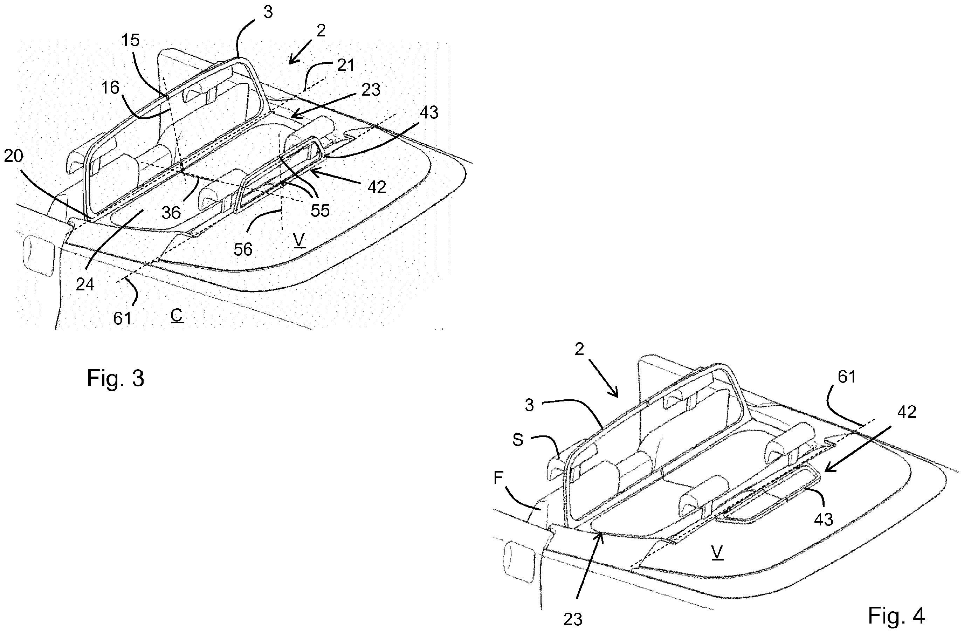

In den Fig. 1-7 ist eine erste Ausführungsform einer erfindungsgemäßen Windschutzeinrichtung 1 dargestellt, die zwei Windschotteinrichtungen 2 und 42 aufweist. Beide sind vorliegend gemäß der Fig. 3-7 separat und reversibel in einem viersitzigen Cabriolet C befestigt. Die vordere, erste Windschotteinrichtung 2 ist unmittelbar hinter den Vordersitzen des Cabriolets eingesteckt, während die hintere, zweite Windschotteinrichtung 42, die schmaler und niedriger ist als die erste Windschotteinrichtung 2, hinter den Hintersitzen des Cabriolets befestigt ist.

Die erste Windschotteinrichtung 2 weist zwei Rahmen auf, zum einen einen Windschottrahmen 3 und zum anderen einen Abdeckungsrahmen 23. Diese beiden Rahmen 3, 23 sind miteinander mittels eines Schwenkscharniers 20 (in den Figuren überwiegend verdeckt) gelenkig verbunden, so dass beide Rahmen 3, 23 um eine Schwenkachse 21 gegeneinander verschwenkt werden können.

Der Windschottrahmen 3 weist gemäß der Fig. 1 und 2 ein unteres Querprofil 5 und ein oberes Querprofil 6 auf, die jeweils seitlich mit zwei Seitenprofilen 7 bzw. 8 verbunden sind und im aufgeklappten Zustand des Windschottrahmens 3 einen geschlossenen Rahmenverlauf bilden. Innerhalb der Profile 5-8 ist eine Flachmaterialbahn 4 eingespannt, die windabweisend, aber nicht windundurchlässig und nicht blickdicht ist. Weiterhin ist der Windschottrahmen 3 mittels Klappscharnieren 15, die an den Querprofilen 5, 6 angeordnet sind, um eine Klappachse 16 klapp- bzw. schwenkbar.

Der Abdeckungsrahmen 23 weist gemäß der Fig. 1 und 2 in Gebrauchsposition ein vorderes Querprofil 25 (zur Cabriolet-Front weisend) und ein hinteres Querprofil 26 (zum Cabriolet-Heck weisend) auf, die jeweils seitlich mit zwei Seitenprofilen 27 bzw. 28 verbunden sind und im aufgeklappten Zustand des Abdeckungsrahmens 23 einen geschlossenen Rahmenverlauf bilden. Innerhalb der Profile 25-28 ist eine Flachmaterialbahn 37 eingespannt, die windabweisend und vorteilhafterweise auch blickdicht ist. Weiterhin ist der Abdeckungsrahmen 23 mittels Klappscharnieren 35, die an den Querprofilen 25, 26 angeordnet sind, um eine Klappachse 36 klapp- bzw. schwenkbar. Mittels vier federnden und/oder starren Fixiereinrichtungen 34, die an den Profilecken des Abdeckungsrahmens 23 angeordnet sind, ist die erste Windschotteinrichtung 2 in dem Cabriolet C einsteckbar, beispielsweise verrastbar.

Die erfindungsgemäße Windschutzeinrichtung 1 umfasst neben der ersten Windschotteinrichtung 2 die schon oben erwähnte zweite Windschotteinrichtung 42. Diese besteht im Wesentlichen aus einem Windschottrahmen 43, der - ähnlich dem Windschottrahmen 3 - im aufgespannten Zustand trapezförmig ausgebildet ist, s. Fig. 1. Dementsprechend weist der Windschottrahmen 43 ein unteres Querprofil 45, ein oberes Querprofil 46 sowie zwei Seitenprofilelemente 47 bzw. 48 auf. Des Weiteren ist eine Flachmaterialbahn 44 im Windschottrahmen 43 eingespannt. Angemerkt sei, dass die Flachmaterialbahnen 4, 37, 44 lediglich in der Fig. 1 dargestellt sind.

Auch der Windschottrahmen 43 besitzt zwei Klappscharniere 55 an seinen beiden Querprofilen 45, 46, so dass der Windschottrahmen 43 um eine Klappachse 56 klappbar ist.

Erfindungsgemäß ist die zweite Windschotteinrichtung 42 mit der ersten Windschotteinrichtung 2 koppelbar, wobei vorliegend das untere Querprofil 45 des Windschottrahmens 43 mit dem unteren Querprofil 5 des Windschottrahmens 3 koppelbar ist, beispielsweise mittels Steck- und/oder Rastverbindungen. In einem speziellen Fall sind als Steckachsen ausgeführte erste Koppelelemente am Windschottrahmen der ersten Windschotteinrichtung vorgesehen, während generell die unterschiedlichsten Koppelarten möglich sind, beispielsweise auch Schienenführungen, Bajonettverschlüsse, etc..

Durch diese erfindungsgemäße Kopplung der beiden Windschotteinrichtungen 2, 42 wird die Handhabbarkeit der Windschutzeinrichtung 1 erleichtert sowie ihr Stauraum im Vergleich zu zwei einzelnen, separaten Windschotteinrichtungen extrem reduziert.

In der Fig. 2 ist die Windschutzeinrichtung 1 im kompakten, zweifach zusammengefalteten Zustand dargestellt. Hierbei ist zunächst der erste Windschottrahmen 3 um die Schwenkachse 21 auf den zweiten Windschottrahmen 42 geklappt worden, um anschließend die Windschutzeinrichtung 1 um die zusammenfallenden Klappachsen 16, 36, 56 ein weiteres Mal zu falten. Bei dieser Achsenkonstruktion sind die entsprechenden Scharniere 15, 35 und 55 fluchtend zueinander angeordnet, wie dies in Fig. 2 dargestellt ist. Um dennoch eine große Breite des Windschottrahmens 3 zu erhalten, legen sich bei dieser Konstruktion die Seitenprofile 7 von unten bzw. oben an die Seitenprofile 27 des Abdeckungsrahmens 23.

Zum Koppeln der zweiten Windschotteinrichtung 42 mit der ersten Windschotteinrichtung 2 sind Koppelelemente 9 auf beiden Seiten des geklappten unteren Querprofils 45 des Windschottrahmens 43 vorgesehen, die als Zapfen ausgebildet sind und seitlich in Öffnungen im unteren Querprofil 5 des Windschottrahmens 3 eingeschoben werden und dort verrasten. In der jeweiligen Öffnung ist beispielsweise eine gefederte Rastnase vorgesehen, welche auf der letzten Einschubstrecke des Windschottrahmens 43 in eine Rastnut in dem Zapfen einrastet. Ein Druckknopf (nicht dargestellt) kann vorgesehen sein, um die Feder weiter zu spannen und hierdurch den Zapfen freizugeben, so dass der Windschottrahmen 43 der zweiten Windschotteinrichtung 42 aus dem Rahmen 3 wieder herausgezogen werden kann. Das zum Koppelelement 9 vorgesehene Gegenstück im Rahmen 3 kann in diesen integriert oder nachträglich montiert sein.

Auch eine andere Halterung anstelle dieser Koppelelemente 9 kann ohne Weiteres realisiert werden. Beispielsweise können von oben in entsprechende Öffnungen im Rahmen 3 einschiebbare Steckachsen am Windschottrahmen 43 vorgesehen sein, die in diesen Öffnungen gegen eine Federkraft einrastbar und durch einen Druckknopf, einen Schwenkhebel o.ä. wieder lösbar sind. Prinzipiell sind die unterschiedlichsten, dem Fachmann bekannten Koppelmethoden möglich.

In der Fig. 3 sind beide Windschotteinrichtungen 2, 42 im Fahrzeug befestigt dargestellt, wobei der Abdeckungsrahmen 23 den Fahrgastraum im Bereich der Hintersitze abdeckt. Die abgebildete Situation dient der Veranschaulichung und stellt keine häufige Fahrsituation dar, da eigentlich keine montierte zweite Windschotteinrichtung 42 benötigt wird, wenn der Fahrgastraum abgedeckt ist. Es ist aber auch denkbar, dass auch in der Konstellation gemäß der Fig. 3 der im Fond aufgestellte Windschottrahmen 43 dazu beiträgt, die Windwalze vom Fahrer und Beifahrer fernzuhalten.

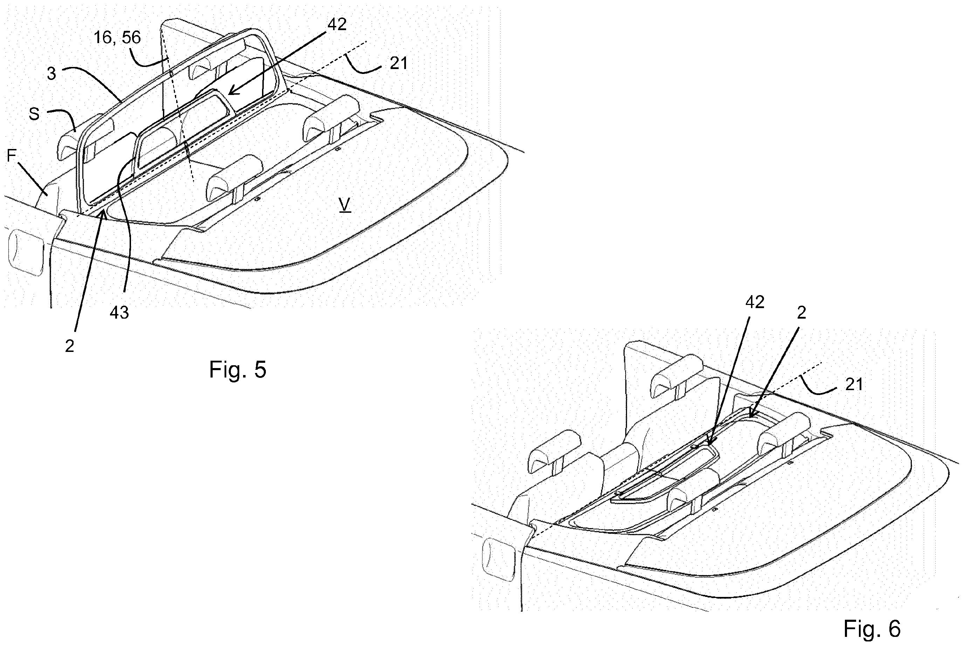

Eine eher typische Fahrsituation besteht beispielsweise darin, dass lediglich auf den Vordersitzen der Fahrer und ggf. eine weitere Person sitzt; dann wird wohl in den meisten Fällen lediglich die erste Windschotteinrichtung 2 im Fahrzeug befestigt, während die zweite Windschotteinrichtung mit der ersten Windschotteinrichtung gekoppelt werden kann (aber nicht muss), wie dies in Fig. 5 dargestellt ist.

In Fig. 6 ist gezeigt, dass die zweite Windschotteinrichtung 42 zusammen mit dem Windschottrahmen 3 der ersten Windschotteinrichtung 2 auf den Abdeckungsrahmen 23 geklappt werden kann. Auch in dieser Position kann das Cabriolet gefahren werden, z.B. wenn den Fahrer/Beifahrer die Windwalze (momentan) nicht stören sollte.

In der Fig. 4 ist dargestellt, dass bei Nichtbenutzung die zweite Windschotteinrichtung 42 auch nach hinten um eine Schwenkachse 61 auf den Verdeckkastendeckel V des Cabriolets C abgeklappt werden kann. Bei Nichtverwendung der zweiten Windschotteinrichtung 42 ist also eine Demontage nicht notwendig; vielmehr kann sie mit dem Cabriolet - in verschwenkter Position - gekoppelt bleiben. Zur Verschwenkbarkeit können die Schwenkscharniere entweder in der zweiten Windschotteinrichtung selbst oder im Verdeckkastendeckel V oder vor diesem im Cabriolet C vorgesehen sein.

Eine zweite typische Fahrsituation besteht darin, dass auch auf den Hintersitzen eine oder mehrere Personen sitzen; in diesem Fall wird die erste Windschotteinrichtung 2 - zumindest solange ein Abdeckungsrahmen vorhanden ist - nicht verwendet und beispielsweise im Kofferraum verstaut, während die zweite Windschotteinrichtung 42 im Bereich der Kopfstützen der hinteren Sitzreihe des Cabriolets C aufgestellt wird.

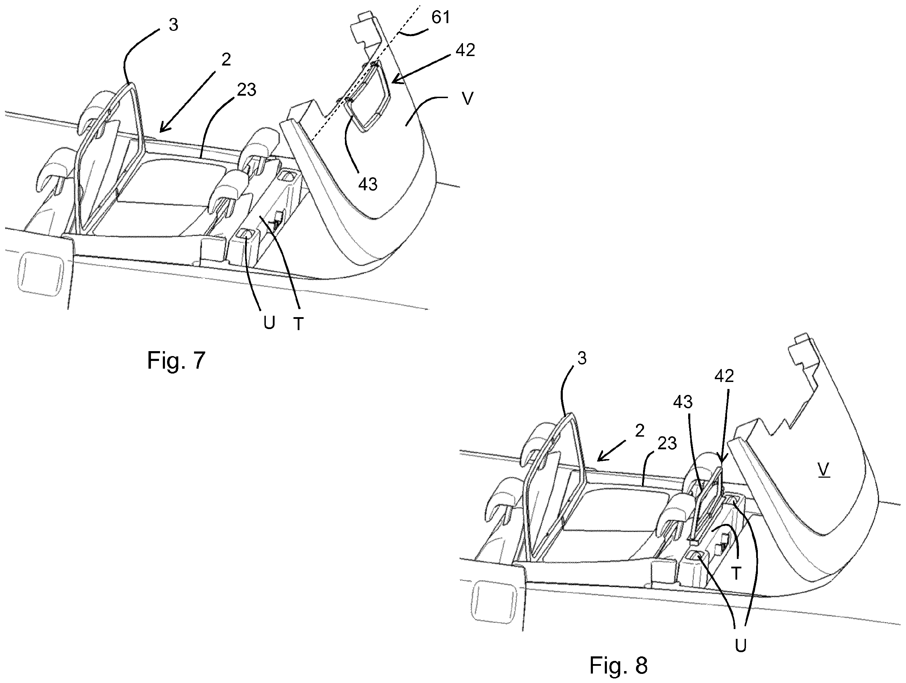

In den Fig. 7 und 8 sind zwei Möglichkeiten dargestellt, die zweite Windschotteinrichtung 42 in Bezug auf den Verdeckkastendeckel V zu platzieren. Während gemäß der Fig. 7 die zweite Windschotteinrichtung 42 auf dem Verdeckkastendeckel V gesteckt ist und mit diesem verschwenkt werden kann, verbleibt bei der Ausführungsform gemäß der Fig. 8 die zweite Windschotteinrichtung 42 hinter den hinteren Kopfstützen und ist hier zwischen den zwei pfostenartigen Überrollelementen U, die jeweils nahe der Fahrzeugseiten und zudem oberhalb einer die beiden Überrollelemente U miteinander verbindenden Traverse T angeordnet sind, und welche bei einem Überschlag automatisch ausfahren.

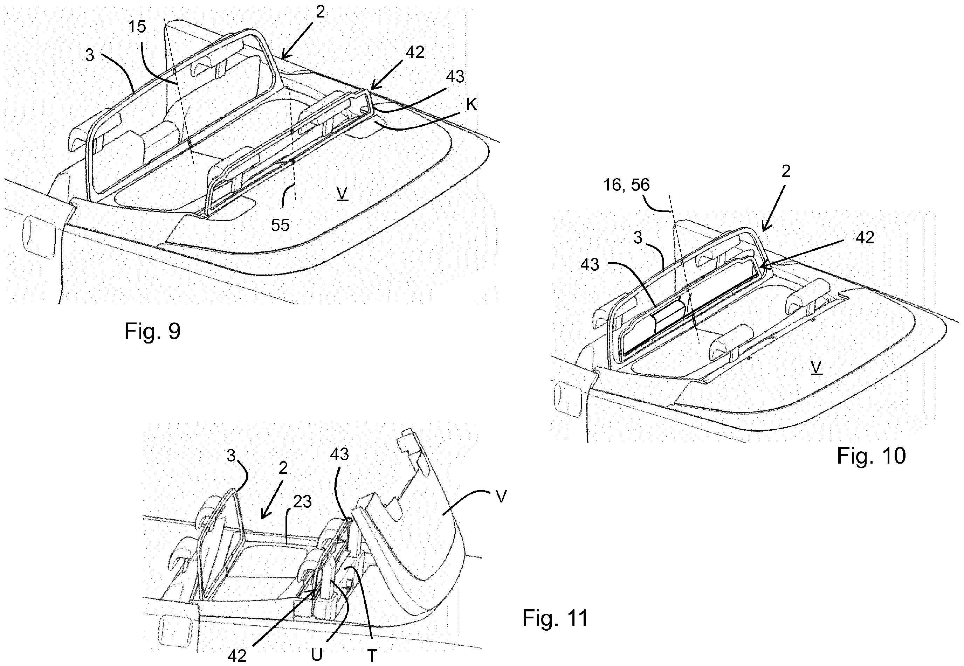

In den Fig. 9-11 ist eine weitere Ausführungsform gezeigt, bei der die zweite Windschotteinrichtung 42 breiter ausgeführt ist. Die Platzierung der ersten Windschotteinrichtung 2 sowie die Kopplung der zweiten 42 mit der ersten Windschotteinrichtung 2 sind vergleichbar mit der Ausführungsform gemäß der Fig. 1-7. Lediglich die Platzierung der zweiten Windschotteinrichtung 42 hinter den Hintersitzen, aber vor (und nicht zwischen) den Überrollelementen U ist unterschiedlich. Eine Anordnung hinter den Überrollelementen U ist ebenfalls möglich. In den Fig. 9-11 sind zudem die beiden Kappen K im Verdeckkastendeckel V dargestellt (ansonsten der Einfachheit halber nur noch in der Fig. 1), die beim Ausfahren der Überrollelemente U weggesprengt werden.

Es ist zu erwähnen, dass bei den vier Ausführungsformen gemäß der Figuren 1-11 und 17 die Flachmaterialbahn 4 an die zweite Windschotteinrichtung 42 angrenzt, wenn diese mit der ersten Windschotteinrichtung 2 gekoppelt ist.

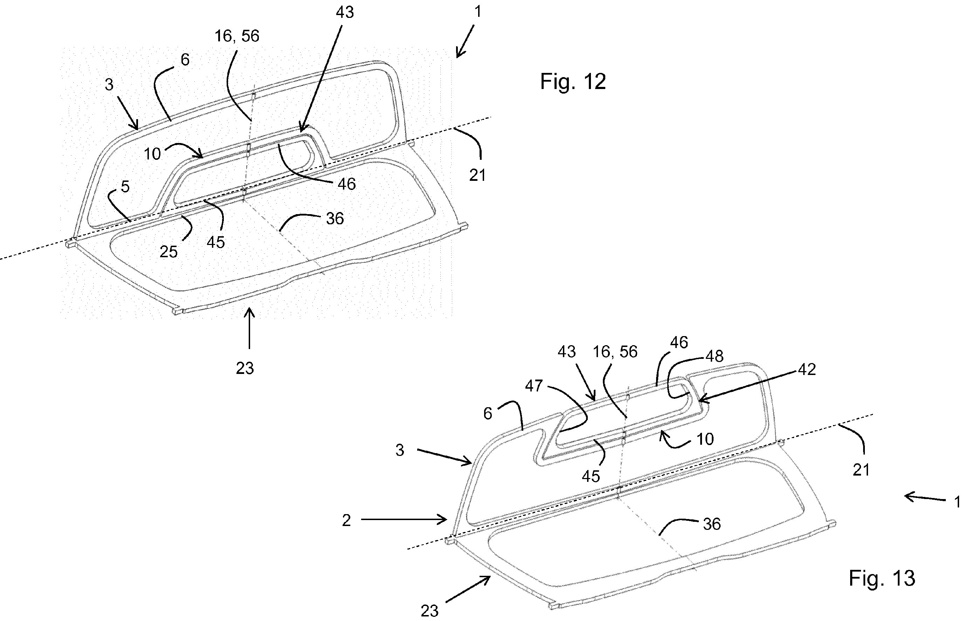

In der Fig. 12 ist eine weitere Ausführungsform einer erfindungsgemäßen Windschutzeinrichtung 1 dargestellt, bei der das untere Querprofil 5 des ersten Windschottrahmens 3 zur Mitte hin in ein vorliegend trapezförmig ausgebildetes Konturprofil 10 übergeht, welches korrespondierend mit der Kontur der Seitenprofile 47, 48 und des oberen Querprofils 46 des Windschottrahmens 43 der zweiten Windschotteinrichtung 42 ausgebildet ist. Nach unten schließt das untere Querprofil 45 der zweiten Windschotteinrichtung 42 an das vordere Querprofil des Abdeckungsrahmens 23 an. Die Kopplung der zweiten Windschotteinrichtung 42 an dem Windschottrahmen 3 der ersten Windschotteinrichtung 2 ist beispielsweise durch entsprechend ausgebildete und beispielsweise wie oben beschrieben ausgebildete Rastverbindungen realisiert. Eine Scharnierverbindung zwischen der zweiten Windschotteinrichtung 42 und dem Abdeckungsrahmen 23 ist vorliegend nicht vorhanden. Vielmehr wird die zweite Windschotteinrichtung 42 durch Abklappen des Windschottrahmens 3 mit verschwenkt.

Eine ähnliche Konstruktion ist in Fig. 13 gezeigt, wobei hier die zweite Windschotteinrichtung 42 in einer oberen Durchbrechung im Windschottrahmen 3 platziert und gekoppelt ist. Hierzu ist ein konkaves, hier ebenfalls trapezförmig ausgebildetes Konturprofil 10 in dem oberen Profilelement 6 vorgesehen, das mit der Kontur des Windschottrahmens 43 der zweiten Windschotteinrichtung 42 korrespondiert.

Beiden Ausführungsformen der Fig. 12 und 13 ist gemein, dass die Achse 16 des Windschottrahmens 3 und die Achse 56 des Windschottrahmens 43 zusammenfallen.

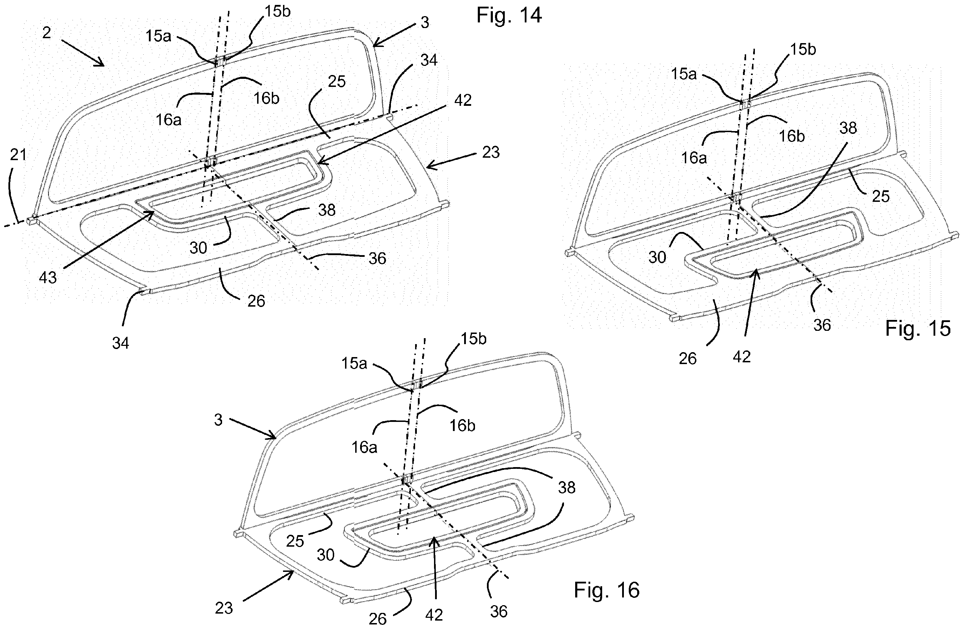

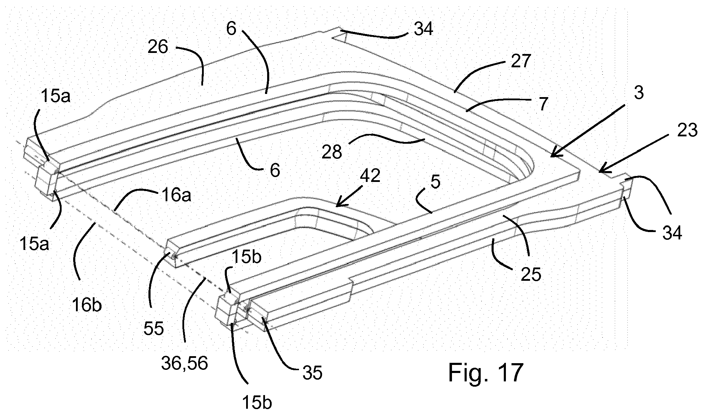

In den Fig. 14-16 sind drei Ausführungsbeispiele dargestellt, bei denen der Windschottrahmen 43 im jeweiligen Koppelzustand vollumfänglich von Profilen des Abdeckungsrahmens 23 eingefasst ist. Hierzu ist gemäß der Fig. 14 ein Steg 38 vorgesehen, welcher sich von dem hinteren Querprofil 26 des Abdeckungsrahmens 23 bis zu einem hier wiederum trapezförmigen Konturprofil 30 erstreckt, das zu beiden Seite der Achse 36 von dem durchgehenden vorderen Querprofil 25 des Abdeckungsrahmens 23 abzweigt. In diesem Konturprofil 30 wird die zweite Windschotteinrichtung 42 gekoppelt, wobei hier wiederum verschiedenste Koppeltechniken einsetzbar sind, beispielsweise Rastverbindungen. Die Klappbarkeit des Abdeckungsrahmens 23 ist durch die Klappachse 36 gegeben. Des Weiteren weist der Windschottrahmen 3 vorliegend ein Doppelgelenk mit Klappscharnieren 15a, 15b mit entsprechenden Klappachsen 16a, 16b auf, so dass sich der Windschottrahmen 3 um den Abdeckungsrahmen 23 legen kann, wenn die Windschotteinrichtung 1 zweimal gefaltet wird (vgl. Fig. 17).

Wie oben ausgeführt, erstreckt sich bei der Ausführungsform gemäß der Fig. 15 ein Steg 38 vom vorderen Querprofil 25 zu dem besagten Konturprofil 30, das von dem hinteren Querprofil 26 ausgeht. Bei der Ausführungsform gemäß der Fig. 16 sind zwei Stege 38 vorgesehen, wobei ein Steg 38 vom vorderen Querprofil 25 des Abdeckungsrahmens 23 und ein Steg 38 vom hinteren Querprofil 26 des Abdeckungsrahmens 23 zum ungefähr mittig im Abdeckungsrahmen 23 liegenden Konturprofils 30 führt. Die Konturprofile 30 stellen einen "Rahmen-im-Rahmen" dar, da sie innerhalb des Abdeckungsrahmens 23 einen eigenen Rahmen bilden.

Bei den Ausführungsformen gemäß der Fig. 14-16 kann in den von den Konturprofilen 30 eingeschlossenen Bereichen eine Flachmaterialbahn eingespannt sein. Eine Nichtbespannung ist ebenfalls möglich (und in den Fig. 14-16 auch dargestellt).

In der Fig. 17 ist ebenfalls eine zweifach klapp- bzw. faltbare Windschutzeinrichtung 1 dargestellt, bei der eine zweite Windschotteinrichtung 42 mit dem Abdeckungsrahmen 23 einer ersten Windschotteinrichtung 2 gekoppelt ist. Die Klappachse 56 der Einfach-Klappscharniere 55 des Windschottrahmens 42 fällt hierbei mit der Klappachse 36 der Einfach-Klappscharniere 35 des Abdeckungsrahmens 23 zusammen (allerdings nicht mit der Klappachse 16a, wie es evtl. die perspektivische Darstellung der Fig. 17 suggeriert). Die beiden Klappachsen 16a, 16b des Windschottrahmens 3 der ersten Windschotteinrichtung 2 liegen parallel zu den zusammenfallenden Achsen 36, 56. Die beiden Rahmenhälften des Windschottrahmens 3 umfassen in dem zweifach gefalteten Zustand gemäß der Fig. 17 die beiden Rahmenhälften des Abdeckungsrahmens 23.

Alternativ ist es auch möglich, dass der Windschottrahmen 43 der zweiten Windschotteinrichtung 42 mit dem Windschottrahmen 3 der ersten Windschotteinrichtung 2 koppelbar ist. Zum zweifachen Klappen der Windschutzeinrichtung 1 weist der Windschottrahmen 43 (bei ansonsten gleicher Ausgestaltung) dann ebenfalls ein Doppelgelenk auf (nicht dargestellt). Hierbei fallen die beiden Klappachsen des Windschottrahmens 43 mit den Klappachsen 16a, 16b des Windschottrahmens 3 zusammen.

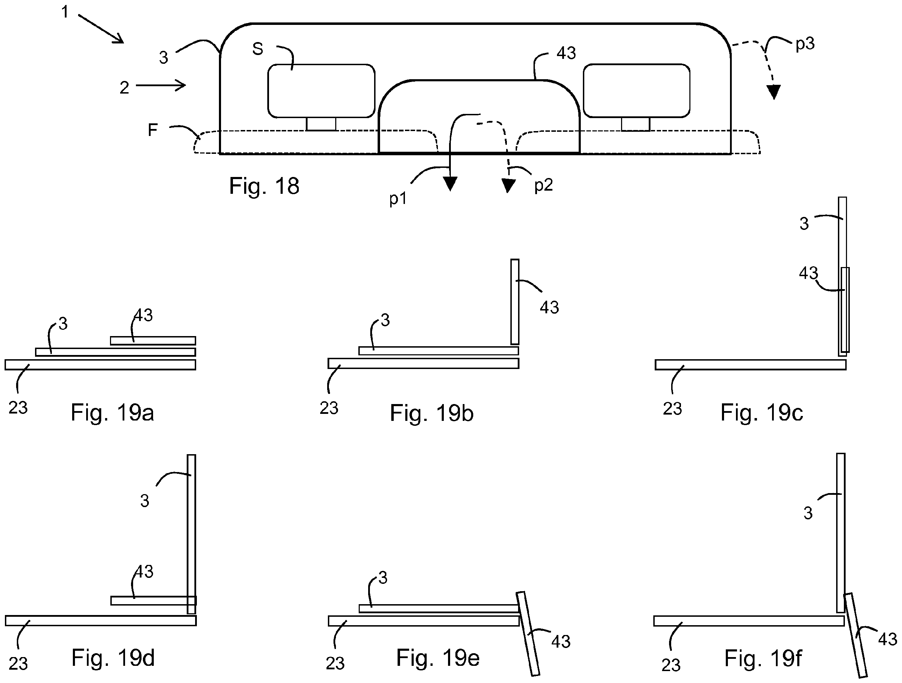

In den Fig. 18 und 19a-19e ist äußerst schematisch dargestellt, welche Klappmöglichkeiten eine Windschutzeinrichtung 1 bei entsprechender Ausgestaltung vorteilhafterweise aufweisen kann. Es wird bei diesen Ausführungsformen angenommen, dass die zweite Windschotteinrichtung 42 - im gekoppelten Zustand mit der ersten Windschotteinrichtung 2 - unabhängig von dieser verschwenkbar ist, wobei hier - je nach Ausgestaltung der Windschutzeinrichtung 1 - verschiedene Schwenkvarianten alternativ oder kumulativ möglich sind.

In der Fig. 18 ist die Windschutzeinrichtung 1 äußerst schematisch in einer Vorderansicht gezeigt. Der durchgehende Pfeil p1 bezeichnet die Schwenkmöglichkeit des Windschottrahmen 43 der zweiten Windschotteinrichtung 42 nach vorne in Fahrrichtung des Fahrzeugs; der Windschottrahmen 3 der ersten Windschotteinrichtung 2 bleibt dabei an seinem Platz, d.h. entweder auf den Abdeckungsrahmen 23 abgeklappt oder in der senkrecht hochgeschwenkten Position (diese ist in Fig. 18 dargestellt). Der gestrichelte Pfeil p2 deutet an, dass der Windschottrahmen 43 der zweiten Windschotteinrichtung 42 nach hinten in Richtung Heck des Cabriolets verschwenkbar ist und der gestrichelte Pfeil p3, dass der Windschottrahmen 3 der ersten Windschotteinrichtung 2 ebenfalls in diese Richtung verschwenkbar ist.

In den Fig. 19a-19e sind mögliche Schwenkpositionen des Windschottrahmens 43 der zweiten Windschotteinrichtung 42 sowie des Windschottrahmens 3 der ersten Windschotteinrichtung 2 in äußerst schematischer Seitenansicht gezeigt, wobei nicht alle Schwenkpositionen bei allen möglichen Ausführungsformen vorhanden sein müssen. Beispielsweise kann ein Abklappen des Windschottrahmens 43 nach vorne in Fahrrichtung möglich sein oder auch nicht-was auch abhängig vom vorhandenen Bauraum sein kann.

In der Fig. 19a ist eine Windschutzeinrichtung 1 dargestellt, bei der der Windschottrahmen 3 der ersten Windschotteinrichtung 2 auf den Abdeckungsrahmen 23 ebenso wie der Windschottrahmen 43 der zweiten Windschotteinrichtung 42 auf den Abdeckungsrahmen 23 abgeklappt sind. Der Windschottrahmen 43 kann alternativ auch innerhalb der Außenkontur des Windschottrahmen 3 angeordnet sein und hierbei beispielsweise vor der Flachmaterialbahn 4 (insbesondere, wenn die zweite Windschotteinrichtung 42 die in den Fig. 19b, 19e und 19f dargestellten Schwenkpositionen einnehmen soll). In der Fig. 19b ist nur der Windschottrahmen 43 in eine Gebrauchsstellung hochgeklappt, in der Fig. 19c zusätzlich auch der Windschottrahmen 3 und in der Fig. 19d nur der Windschottrahmen 3. Der Bediener kann selbst aussuchen, ob ihm der Schutz durch die kleinere zweite Windschotteinrichtung 42 ausreicht oder ob er auch den Windschottrahmen 3 hochklappen möchte. In der Fig. 19e ist der Windschottrahmen 43 nach vorne unten abgeklappt, während der Windschottrahmen 3 in der Ruheposition auf dem Abdeckungsrahmen 23 verbleibt. In der Fig. 19f ist der Windschottrahmen 43 nach vorne unten abgeklappt und der Windschottrahmen 3 in eine Gebrauchsposition hochgeschenkt.

Die Erfindung wurde anhand von Ausführungsbeispielen näher erläutert. Die Erfindung beschränkt sich jedoch nicht auf diese, sondern ist durch den Gegenstand der Ansprüche definiert. Weitere zum Teil nicht in den Figuren gezeigte mögliche Ausführungsformen umfassen beispielsweise andere geometrische Ausgestaltungen der zweiten und auch der ersten Windschotteinrichtung. Die zweite Windschotteinrichtung kann z.B. eine andere Form als ein Trapez haben, beispielsweise die Form eines Rechtecks. Auch kann der Windschottrahmen der zweiten Windschotteinrichtung zwischen den hinteren Kopfstützen einsteckbar ausgebildet sein. Weiterhin kann der Windschottrahmen der zweiten Windschotteinrichtung ein Doppelgelenk mit zwei parallelen Klappachsen aufweisen, wobei diese Klappachsen mit den Klappachsen des Doppelgelenks der ersten Windschotteinrichtung zusammenfallen. Eine weitere nicht dargestellte Ausführungsform besteht darin, dass der Windschottrahmen der zweiten Windschotteinrichtung in eine Rahmenhälfte des mindestens einen Rahmens der ersten Windschotteinrichtung einsteckbar ist. Beim Zusammenfalten der Windschutzeinrichtung wird dann nur die erste Windschotteinrichtung, nicht aber die zweite geklappt. In diesem Fall, wenn die zweite mit der ersten Windschotteinrichtung gekoppelt ist und die erste Windschotteinrichtung hinter den Kopfstützen der vorderen Sitzreiche platziert ist, behindert die zweite Windschotteinrichtung dann nicht die Sicht nach hinten, weder durch den Rückspiegel noch beim Schulterblick zwischen den Kopfstützen hindurch. Weiterhin ist es möglich, dass der Windschottrahmen der zweiten Windschotteinrichtung schwenkbar mit der ersten Windschotteinrichtung gekoppelt ist.

Bei einer weiteren nicht dargestellten Ausführungsform ist die erfindungsgemäße Windschutzeinrichtung in einem Roadster platzierbar, wobei die beiden Rahmen der ersten und der zweiten Windschutzeinrichtung alternativ oder zusammen zwischen oder hinter der einzigen Sitzreihe angeordnet werden können. Es kann hierbei vorgesehen sein, dass ein oder beide Rahmen abklappbar und aufstellbar ausgebildet sind (vgl. Fig. 19a-19f).

### Bezugszeichenliste

- 1: Windschutzeinrichtung
- 2: erste Windschotteinrichtung
- 3: Windschottrahmen der ersten Windschotteinrichtung
- 4: Flachmaterialbahn
- 5: unteres Querprofil des Windschottrahmens
- 6: oberes Querprofil des Windschottrahmens
- 7: Seitenprofil des Windschottrahmens
- 8: Seitenprofil des Windschottrahmens
- 9: Koppelelemente
- 10: Konturprofil
- 15: Klappscharniere des Windschottrahmens
- 15a,b: Klappscharnieren des Windschottrahmens
- 16: Klappachse des Windschottrahmens
- 16a,b: Klappachsen des Windschottrahmens
- 18: Doppelscharnier des Windschottrahmens
- 19: Klappachsen des Doppelscharniers
- 20: Schwenkscharnier für erste Windschotteinrichtung
- 21: Schwenkachse
- 23: Abdeckungsrahmen der ersten Windschotteinrichtung
- 24: Flachmaterialbahn
- 25: vorderes Querprofil des Abdeckungsrahmens
- 26: hinteres Querprofil des Abdeckungsrahmens
- 27: Seitenprofil des Abdeckungsrahmens
- 28: Seitenprofil des Abdeckungsrahmens
- 30: Konturprofil
- 34: Fixiereinrichtungen
- 35: Klappscharniere des Abdeckungsrahmens
- 36: Klappachse des Abdeckungsrahmens
- 37: Flachmaterialbahn
- 38: Steg
- 42: zweite Windschotteinrichtung
- 43: Windschottrahmen der zweiten Windschotteinrichtung
- 44: Flachmaterialbahn
- 45: unteres Querprofil des Windschottrahmens
- 46: oberes Querprofil des Windschottrahmens
- 47: Seitenprofil des Windschottrahmens
- 48: Seitenprofil des Windschottrahmens
- 55: Klappscharniere des Windschottrahmens
- 56: Klappachse des Windschottrahmens
- 60: Schwenkscharnier für zweite Windschotteinrichtung
- 61: Schwenkachse
- C: Cabriolet
- S: Kopfstütze
- F: Vordersitz
- V: Verdeckkastendeckel
- U: Überrollelement
- T: Traverse
- K: Kappen

## Patentansprüche

1. Windschutzeinrichtung zum reversiblen Einbau in ein Cabriolet zum Schutz von dessen Fahrzeuginsassen vor Fahrtwindverwirbelungen, mit einer ersten, mindestens einen Rahmen (3, 23) und mindestens eine Flachmaterialbahn (4) umfassenden Windschotteinrichtung (2) zum Schutz der Fahrzeuginsassen, und mit einer zweiten, mindestens einen Windschottrahmen (43) und mindestens eine Flachmaterialbahn (44) aufweisenden Windschotteinrichtung (42), wobei der Windschottrahmen (43) der zweiten Windschotteinrichtung (42) mit dem besagten Rahmen (3, 23) der ersten Windschotteinrichtung (2) über Koppelelemente (9) reversibel koppelbar ist, **dadurch gekennzeichnet, dass** der Windschottrahmen (43) der zweiten Windschotteinrichtung (42) im vom besagten Rahmen (3, 23) der ersten Windschotteinrichtung (2) entkoppelten Zustand:
- zum Aufstellen im Bereich der Kopfstützen einer hinteren Sitzreihe ausgebildet ist,
- derart ausgebildet ist, dass er zwischen den hinteren Kopfstützen einsteckbar ist,
- zum Aufstellen im Bereich einer vorderen Sitzreihe des Cabriolets ausgebildet ist,
- mit einem fest im Cabriolet montierten, aber beweglichen Verdecckastendeckel (V) koppelbar ist, und/oder
- mit dem Cabriolet vor oder über einer in y-Richtung des Cabriolets (C) verlaufenden, zwei Überrollelemente (U) miteinander verbindenden Traverse (T) koppelbar ist, insbesondere mittels unter Verkleidungsteilen des Cabriolets versteckten Koppelstellen.

2. Windschutzeinrichtung nach Anspruch 1, **dadurch gekennzeichnet, dass** der Windschottrahmen (43) der zweiten Windschotteinrichtung (42) im mit dem besagten Rahmen (3, 23) der ersten Windschotteinrichtung (2) gekoppelten Zustand zum Aufstellen im Bereich der Kopfstützen einer vorderen Sitzreihe des Cabriolets ausgebildet ist.

3. Windschutzeinrichtung nach einem der vorherigen Ansprüche, **dadurch gekennzeichnet, dass** der Windschottrahmen (43) der zweiten Windschotteinrichtung (42) und/oder der besagte Rahmen (3, 23) der ersten Windschotteinrichtung (2) separat und/oder zusammen aus einer Arbeitsposition in eine Ablageposition reversibel abklappbar, im Cabriolet (C) positionierbar sind.

4. Windschutzeinrichtung nach einem der vorherigen Ansprüche, **dadurch gekennzeichnet, dass** der Windschottrahmen (43) der zweiten Windschotteinrichtung (42) mit dem besagten Rahmen (3, 23) der ersten Windschotteinrichtung (2) reversibel zusammensteckbar ist, vorzugsweise verrastbar, wobei vorzugsweise die Koppelelemente als Rast-elemente, vorzugsweise als Steckachsen, ausgebildet sind, vorzugsweise lösbar mittels gefedertem Druckknopf oder Schwenkhebel.

5. Windschutzeinrichtung nach einem oder mehreren der vorherigen Ansprüche, **dadurch gekennzeichnet, dass** der besagte Rahmen (3, 23) der ersten Windschotteinrichtung (2) ein Windschottrahmen (3) ist, der aufrecht hinter oder zwischen den Kopfstützen einer vorderen Sitzreihe reversibel platzierbar ist, oder dass der besagte Rahmen (3, 23) der ersten Windschotteinrichtung (2) ein Abdeckungsrahmen (23) ist, der im eingebauten Zustand der ersten Windschotteinrichtung (2) einen Fahrgastraum hinter einer vorderen Sitzreihe abdeckt, und dass die erste Windschotteinrichtung (2) zusätzlich zum Abdeckungsrahmen (23) einen Windschottrahmen (3) umfasst, der aufrecht hinter oder zwischen den Kopfstützen der vorderen Sitzreihe platzierbar ist.

6. Windschutzeinrichtung nach einem oder mehreren der vorherigen Ansprüche, **dadurch gekennzeichnet, dass** der Windschottrahmen (43) der zweiten Windschotteinrichtung (42) im gekoppelten Zustand außerhalb oder innerhalb der Außenkontur des Rahmens (3, 23) der ersten Windschotteinrichtung (2) liegt oder lediglich an einer Rahmenseite mit dem Rahmen (3, 23) der ersten Windschotteinrichtung (2) koppelbar ist.

7. Windschutzeinrichtung nach einem oder mehreren der vorherigen Ansprüche, **dadurch gekennzeichnet, dass** der Windschottrahmen (43) der zweiten Windschotteinrichtung (42) eine umlaufende Kontur aufweist, die innerhalb eines entsprechend komplementär ausgebildeten umlaufenden Konturprofils (30) des mindestens einen Rahmens (23) der ersten Windschotteinrichtung (2) aufnehmbar ist, wobei vorzugsweise mehrere Koppelstellen entlang des Windschottrahmens (43) der zweiten Windschotteinrichtung (42) mit dem besagen Konturprofil (30) der ersten Windschotteinrichtung (2) vorhanden sind.

8. Windschutzeinrichtung nach einem oder mehreren der vorherigen Ansprüche, **dadurch gekennzeichnet, dass** der Windschottrahmen (43) der zweiten Windschotteinrichtung (42) in ein offenes konkaves Konturprofil (10) im Rahmen (3) der ersten Windschotteinrichtung (2) einsetzbar ist.

9. Windschutzeinrichtung nach einem oder mehreren der vorherigen Ansprüche, **dadurch gekennzeichnet, dass** in dem zum Einstecken der zweiten Windschottvorrichtung (42) vorgesehenen Bereich der ersten Windschotteinrichtung (2) eine Flachmaterialbahn eingespannt ist oder dieser Bereich offen ist.

10. Windschutzeinrichtung nach einem oder mehreren der vorherigen Ansprüche, **dadurch gekennzeichnet, dass** sowohl der besagte Rahmen (3, 23) der ersten Windschotteinrichtung (2) als auch der Windschottrahmen (43) der zweiten Windschotteinrichtung (42) mindestens jeweils eine Klappachse (16, 56; 36, 56; 16, 36, 56) aufweisen, wobei die Klappachsen (16, 36, 56) im gekoppelten Zustand zusammenfallen, sodass beim Zusammenfalten der Windschutzeinrichtung (1) beide Windschotteinrichtungen (2, 42) um die gleiche Achse (16, 36) klappbar sind.

11. Windschutzeinrichtung nach einem oder mehreren der vorherigen Ansprüche, **dadurch gekennzeichnet, dass** der besagte mindestens eine Rahmen (3, 23) der ersten Windschotteinrichtung (2) ein Doppelgelenk mit zwei parallelen Klappachsen (16a, 16b) aufweist, wobei vorzugsweise auch der besagte Windschottrahmen (43) der zweiten Windschotteinrichtung (42) ein Doppelgelenk mit zwei parallelen Klappachsen aufweist, und diese Klappachsen mit den Klappachsen des Doppelgelenks der ersten Windschotteinrichtung (2) zusammenfallen.

12. Windschutzeinrichtung nach einem oder mehreren der vorherigen Ansprüche, **dadurch gekennzeichnet, dass** der Windschottrahmen (43) der zweiten Windschotteinrichtung (42) in eine Rahmenhälfte des mindestens einen Rahmens (3, 23) der ersten Windschotteinrichtung (2) einsteckbar ist, so dass beim Zusammenfalten der Windschutzeinrichtung (1) nur die erste Windschotteinrichtung (2) klappbar ist.

13. Windschutzeinrichtung nach einem oder mehreren der vorherigen Ansprüche, **dadurch gekennzeichnet, dass** Koppelelemente am Windschottrahmen (43) der zweiten Windschotteinrichtung (42) vorgesehen sind, die einerseits zum Koppeln mit dem besagten Rahmen (3, 23) der ersten Windschotteinrichtung (2) und andererseits zum Koppeln mit dem Cabriolet, insbesondere mit an Verkleidungsteilen vorgesehenen Aufnahmen, ausgebildet sind, beispielsweise als Steckstifte, die in Öffnungen am Cabriolet, vorzugsweise am Verdeckkastendeckel, einführbar sind.

14. Cabriolet mit einer Windschutzeinrichtung nach einem oder mehreren der vorherigen Ansprüche.

## Claims

1. A wind protection for reversibly installing in a cabriolet for protecting the vehicle occupants against airstream turbulence, having a first wind deflector device (2) for protecting the vehicle occupants comprising at least one frame (3, 23) and at least one flat material web (4), and having a second wind deflector device (42) comprising at least one wind deflector frame (43) and at least one flat material web (44), wherein the wind deflector frame (43) of the second wind deflector device (42) is reversibly coupled to said frame (3, 23) of the first wind deflector device (2) by means of coupling elements (9), **characterized in that** the wind deflector frame (43) of the second wind deflector device (42), in the state of being uncoupled from said frame (3, 23) of the first wind deflector device (2):
- is implemented for setting up in the region of the head supports of a rear seat row,
- is implemented so as to be inserted between the rear head supports,
- is implemented for setting up in the region of a front row of seats of the cabriolet,
- is coupleable to a folding top case cover (V) fixedly mounted in the cabriolet but displaceable, and/or
- is coupleable to the cabriolet in front of or above a traverse (T) extending in the Y-direction of the cabriolet (C) and connecting two rollover elements (U) to each other, particularly by means of coupling points hidden beneath trim components of the cabriolet.

2. The wind protection device according to claim 1, **characterized in that** the wind deflector frame (43) of the second wind deflector device (42) is implemented in the state of being coupled to said frame (3, 23) of the first wind deflector device (2) for setting up in the region of the head supports of a front row of seats of the cabriolet.

3. The wind protection device according to any one or more of the preceding claims, **characterized in that** the wind deflector frame (43) of the second wind deflector device (42) and/or said frame (3, 23) of the first wind deflector device (2) can be reversibly folded separately and/or together from a working position into a storage position and positioned in the cabriolet (C).

4. The wind protection device according to any one or more of the preceding claims, **characterized in that** the wind deflector frame (43) of the second wind deflector device (42) being reversibly intermateable, preferably latchable, to said frame (3, 23) of the first wind deflector device (2), wherein the coupling elements preferably are implemented as latching elements, preferably as stud axles, preferably releasably by means of a spring-loaded pushbutton or lever.

5. The wind protection device according to any one or more of the preceding claims, **characterized in that** said frame (3, 23) of the first wind deflector device (2) is a wind deflector frame (3), reversibly placeable upright behind or between the head supports of a front row of seats, or that said frame (3, 23) of the first wind deflector device (2) is a cover frame (23) covering a passenger compartment behind a front row of seats in the installed state of the first wind deflector device (2), and that the first wind deflector device (2) comprises a wind deflector frame (3) in addition to the cover frame (23), being placeable upright behind or between the head supports of the front row of seats.

6. The wind protection device according to any one or more of the preceding claims, **characterized in that** in the coupled state the wind deflector frame (43) of the second wind deflector device (42) lies outside or inside of the outer contour of the frame (3, 23) of the first wind deflector device (2) or can be coupled to the frame (3, 23) of the first wind deflector device (2) at only one side of the frame.

7. The wind protection device according to any one or more of the preceding claims, **characterized in that** the wind deflector frame (43) of the second wind deflector device (42) comprises a surrounding contour for being receivable within a correspondingly complementary surrounding contour profile (30) of the at least one frame (23) of the first wind deflector device (2), wherein preferably a plurality of coupling points are present along the wind deflector frame (43) of the second wind deflector device (42) having said contour profile (30) of the first wind deflector device (2).

8. The wind protection device according to any one or more of the preceding claims, **characterized in that** the wind deflector frame (43) of the second wind deflector device (42) can be inserted in an open, concave contour profile (10) in the frame (3) of the first wind deflector device (2).

9. The wind protection device according to any one or more of the preceding claims, **characterized in that** a flat material web is clamped in the region of the first wind deflector device (2) provided for inserting the second wind deflector device (42), or said region is open.

10. The wind protection device according to any one or more of the preceding claims, **characterized in that** both said frame (3, 23) of the first wind deflector device (2) and the wind deflector frame (43) of the second wind deflector device (42) each comprise at least one hinged axis (16, 56; 36, 56; 16, 36, 56), the hinged axes (16, 36, 56) aligning in the coupled state, so that when the wind protection device (1) is folded together, both wind deflector device (2, 42) can be folded about the same axis (16, 36).

11. The wind protection device according to any one or more of the preceding claims, **characterized in that** said at least one frame (3, 23) of the first wind deflector device (2) comprises a double joint having two parallel hinged axes (16a, 16b), wherein said wind deflector frame (43) of the second wind deflector device (42) preferably also comprises a double joint having two parallel hinged axes, and said hinged axes align with the hinged axes of the double joint of the first wind deflector device (2).

12. The wind protection device according to any one or more of the preceding claims, **characterized in that** the wind deflector frame (43) of the second wind deflector device (42) can be inserted into a half of the at least one frame (3, 23) of the first wind deflector device (2), so that only the first wind deflector device (2) can be folded when folding the wind protection device (1).

13. The wind protection device according to any one or more of the preceding claims, **characterized in that** coupling elements are provided on the wind deflector frame (43) of the second wind deflector device (42) and are implemented on the one hand for coupling with said frame (3, 23) of the first wind deflector device (2) and on the other hand for coupling to the cabriolet particularly for coupling to receiving elements provided on trim components, for example as pins for inserting in openings on the cabriolet, preferably on the folding top case cover.

14. A cabriolet having a wind protection device according to any one or more of the preceding claims.

## Revendications

1. Dispositif de protection contre le vent à installer de manière réversible dans un véhicule décapotable pour protéger ses passagers contre des tourbillonnements du courant d'air lié au déplacement du véhicule, avec un premier dispositif pare-vent (2) pour protéger les passagers du véhicule comprenant au moins un cadre (3, 23) et au moins une bande de matériau plat (4), et avec un second dispositif pare-vent (42) comprenant au moins un cadre coupe-vent (43) et au moins une bande de matériau plat (44), sachant que le cadre coupe-vent (43) du second dispositif pare-vent (42) peut être couplé de manière réversible avec ledit cadre (3, 23) du premier dispositif pare-vent (2) via des éléments de couplage (9), **caractérisé en ce que** le cadre coupe-vent (43) du second dispositif pare-vent (42), à l'état découplé dudit cadre (3, 23) du premier dispositif pare-vent (2) :
- se présente sous une forme pour être placé dans la zone des appuie-têtes d'une rangée de sièges arrière,
- se présente sous une forme de manière à pouvoir être embroché entre les appuie-têtes arrière,
- se présente sous une forme de manière à pouvoir être installé dans la zone d'une rangée de sièges avant du véhicule décapotable,
- peut être couplé à un couvercle de caisson de capote (V) monté à demeure, mais mobile, dans le véhicule décapotable, et/ou
- peut être couplé au cabriolet devant ou par-dessus une traverse (T) s'étendant dans la direction y du véhicule décapotable (C) et reliant l'un avec l'autre deux éléments de sécurité au retournement (U), en particulier au moyen de points de couplage dissimulés sous des parties d'habillage du véhicule décapotable.

2. Dispositif de protection contre le vent selon la revendication 1, **caractérisé en ce que** le cadre coupe-vent (43) du second dispositif pare-vent (42), à l'état couplé avec ledit cadre (3, 23) du premier dispositif pare-vent (2), se présente sous une forme pour être installé dans la zone des appuie-têtes d'une rangée de sièges avant du véhicule décapotable.

3. Dispositif de protection contre le vent selon l'une des revendications précédentes, **caractérisé en ce que** le cadre coupe-vent (43) du second dispositif pare-vent (42) et/ou ledit cadre (3, 23) du premier dispositif pare-vent (2) peuvent être rabattus séparément et/ou ensemble, de manière réversible, d'une position de travail dans une position de rangement, positionnables dans le véhicule décapotable (C).

4. Dispositif de protection contre le vent selon l'une des revendications précédentes, **caractérisé en ce que** le cadre coupe-vent (43) du second dispositif pare-vent (42) peut être embroché de manière réversible, de préférence encliqueté, avec ledit cadre (3, 23) du premier dispositif pare-vent (2), sachant que, de préférence, les éléments de couplage se présentent sous la forme d'éléments d'encliquetage, de préférence, d'axes enfichables, de préférence amovibles au moyen d'un bouton-poussoir ou d'un levier pivotant chargé par ressort.

5. Dispositif de protection contre le vent selon l'une ou plusieurs des revendications précédentes, **caractérisé en ce que** ledit cadre (3, 23) du premier dispositif pare-vent (2) est un cadre coupe-vent (3) qui peut être placé à la verticale, de manière réversible, derrière ou entre les appuie-têtes d'une rangée de sièges avant, ou **en ce que** ledit cadre (3, 23) du premier dispositif pare-vent (2) est un cadre de recouvrement (23) qui, à l'état monté du premier dispositif pare-vent (2), recouvre un habitacle derrière une rangée de sièges avant, et **en ce que**, outre le cadre de recouvrement (23), le premier dispositif pare-vent (2) comprend un cadre coupe-vent (3) qui peut être placé à la verticale derrière ou entre les appuie-têtes de la rangée de sièges avant.

6. Dispositif de protection contre le vent selon l'une ou plusieurs des revendications précédentes, **caractérisé en ce que** le cadre coupe-vent (43) du second dispositif pare-vent (42), à l'état couplé, se situé à l'intérieur ou à l'extérieur du contour extérieur du cadre (3, 23) du premier dispositif pare-vent (2) ou peut être couplé seulement sur un côté du cadre avec le cadre (3, 23) du premier dispositif pare-vent (2).

7. Dispositif de protection contre le vent selon l'une ou plusieurs des revendications précédentes, **caractérisé en ce que** le cadre coupe-vent (43) du second dispositif pare-vent (42) présente un contour circonférentiel qui peut être accueilli dans un profil de contour (30) circonférentiel se présentant sous une forme adéquatement complémentaire de l'au moins un cadre (23) du premier dispositif pare-vent (2), sachant que, de préférence, plusieurs points de couplage sont présents le long du cadre coupe-vent (43) du second dispositif pare-vent (42) avec ledit profil de contour (30) du premier dispositif pare-vent (2).

8. Dispositif de protection contre le vent selon l'une ou plusieurs des revendications précédentes, **caractérisé en ce que** le cadre coupe-vent (43) du second dispositif pare-vent (42) peut être inséré dans un profil de contour (10) ouvert concave dans le cadre (3) du premier dispositif pare-vent (2).

9. Dispositif de protection contre le vent selon l'une ou plusieurs des revendications précédentes, **caractérisé en ce qu'**une bande de matériau plat est tendue dans la zone du premier dispositif pare-vent (2) prévue pour l'insertion du second dispositif pare-vent (42) ou cette zone est ouverte.

10. Dispositif de protection contre le vent selon l'une ou plusieurs des revendications précédentes, **caractérisé en ce que** tant ledit cadre (3, 23) du premier dispositif pare-vent (2) que le cadre coupe-vent (43) du second dispositif pare-vent (42) présentent respectivement au moins un axe de pivotement (16, 56 ; 36, 56 ; 16, 36, 56), sachant que les axes de pivotement (16, 36, 56) coïncident les uns avec les autres à l'état couplé, de sorte que les deux dispositifs pare-vent (2, 42) puissent être repliés autour du même axe (16, 36) lorsque le dispositif de protection contre le vent (1) est replié.

11. Dispositif de protection contre le vent selon l'une ou plusieurs des revendications précédentes, **caractérisé en ce que** ledit au moins un cadre (3, 23) du premier dispositif pare-vent (2) présente une double articulation avec deux axes de pivotement (16a, 16b) parallèles, sachant que, de préférence, ledit cadre coupe-vent (43) du second dispositif pare-vent (42) présente également une double articulation avec deux axes de pivotement parallèles et ces axes de pivotement coïncident avec les axes de pivotement de la double articulation du premier dispositif pare-vent (2).

12. Dispositif de protection contre le vent selon l'une ou plusieurs des revendications précédentes, **caractérisé en ce que** le cadre coupe-vent (43) du second dispositif pare-vent (42) peut être emboité dans une moitié de cadre de l'au moins un cadre (3, 23) du premier dispositif pare-vent (2), de sorte que seul le premier dispositif pare-vent (2) soit repliable lors du repliement du dispositif de protection contre le vent (1).

13. Dispositif de protection contre le vent selon l'une ou plusieurs des revendications précédentes, **caractérisé en ce que** des éléments de couplage sont prévus sur le cadre coupe-vent (43) du second dispositif pare-vent (42), lesquels se présentent sous une forme pour le couplage, d'une part, avec ledit cadre (3, 23) du premier dispositif pare-vent (2) et, d'autre part, avec le véhicule décapotable, en particulier, avec des logements prévus dans des parties d'habillage, par exemple en tant que broches enfichables, qui peuvent être introduits dans des ouvertures sur le véhicule décapotable, de préférence sur le couvercle de caisson de capote.

14. Véhicule décapotable avec un dispositif de protection contre le vent selon l'une ou plusieurs des revendications précédentes.
